# EUROPÄISCHE PATENTSCHRIFT

(11) **EP 3 963 692 B1**
(45) Veröffentlichungstag und Bekanntmachung des Hinweises auf die Patenterteilung: **10.09.2025**
(21) Anmeldenummer: 20716775.0
(22) Anmeldetag: 02.04.2020
(51) Int. Cl.: H02K 3/02, H02K 3/52

(54) **STATOR EINER ELEKTRISCHEN MASCHINE**
STATOR OF AN ELECTRIC MACHINE
STATOR D'UNE MACHINE ÉLECTRIQUE

(30) Priorität: 29.04.2019 DE 102019206107
(43) Veröffentlichungstag der Anmeldung: 09.03.2022
(73) Patentinhaber: Robert Bosch GmbH, 70442 Stuttgart (DE)
(72) Erfinder: KUJATH, Juergen, 31008 Elze (DE); ROEPKE, Matthias, 31141 Hildesheim (DE); SAUERMANN, Jens, 12524 Berlin (DE)
(86) Internationale Anmeldenummer: PCT/EP2020/059344
(87) Internationale Veröffentlichungsnummer: WO 2020/221545

(56) Entgegenhaltungen:
- WO-A1-2015/083623
- WO-A1-2019/023379
- US-A1- 2005 023 910
- US-A1- 2019 013 713

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der US 2005/0023910 A1 bekannt, der Statorzähne und zwischen den Statorzähnen ausgebildete Nuten aufweist, in denen jeweils als Einzelspulen ausgebildete elektrische Leiterelemente einer elektrischen Einzelspulenwicklung vorgesehen sind, wobei an zumindest einer Stirnseite des Stators ein Verschaltring vorgesehen ist, der einen Ringabschnitt und mehrere, insbesondere der Anzahl der Statorzähne entsprechende, von dem Ringabschnitt in radialer Richtung abstehende Zahnabschnitte aufweist. Der Verschaltring umfasst mehrere Stromschienen zur Verschaltung der elektrischen Einzelspulen der elektrischen Wicklung. Die Einzelspulen sind aus einem herkömmlichen Leitermaterial, beispielsweise Kupfer, hergestellt.

Weiterhin sind elektrische Maschinen bekannt, deren elektrische Wicklung aus CNT-Leiterelementen hergestellt ist. Unter diesen CNT-Leiterelementen sollen im Folgenden Leiterelemente verstanden werden, die Carbon-Nanotube-Fasern und/oder Graphenfasern umfassen. Die Anwendung von herkömmlichen Fügeverfahren, wie beispielsweise Schweißen oder Löten, zur Verbindung von CNT-Leiterelementen oder zur elektrischen Anbindung der CNT-Leiterelemente an Schnittstellen des Stators ist nach derzeitigem Stand technisch nicht möglich, da die technischen Anforderungen an die Fügeverbindung hinsichtlich Temperaturbeständigkeit und Festigkeit nicht erfüllt werden.

### Vorteile der Erfindung

Der erfindungsgemäße Stator einer elektrischen Maschine mit den kennzeichnenden Merkmalen des Hauptanspruchs hat demgegenüber den Vorteil, dass eine elektrische Wicklung aus CNT-Leiterelementen bereitgestellt wird, deren Fügeverbindungen die mechanischen und elektrischen Anforderungen einer elektrischen Maschine zuverlässig erfüllen. Dies wird erfindungsgemäß erreicht, indem die Leiterelemente der elektrischen Wicklung als steckbare Leiterelemente der als Steckwicklung ausgebildeten elektrischen Wicklung ausgeführt sind, indem die Leiterelemente jeweils als CNT-Leiterelemente ausgebildet, also jeweils aus einem Verbund von Carbon-Nanotubes und/oder Graphenfasern gebildet sind, und indem an zumindest einem der Zahnabschnitte des Verschaltrings zumindest eine elektrisch nichtleitende Leiterfügeeinrichtung vorgesehen ist, an der jeweils zwei Leiterenden zweier unterschiedlicher Leiterelemente mittels eines elektrisch leitenden Fügemittels elektrisch verbunden sind.

Durch die in den Unteransprüchen aufgeführten Maßnahmen sind vorteilhafte Weiterbildungen und Verbesserungen des im Hauptanspruch angegebenen Stators einer elektrischen Maschine möglich.

Besonders vorteilhaft ist, wenn die Leiterfügeeinrichtung jeweils eine Vertiefung umfasst. In diese Vertiefung können die Leiterenden der Leiterelemente eingelegt und dann mittels eines elektrisch leitfähigen Fügemittels elektrisch verbunden werden.

Weiterhin vorteilhaft ist, wenn an den Leiterfügeeinrichtungen jeweils zwei Einführschlitze vorgesehen sind, über die die Leiterenden in die Vertiefung einlegbar sind. Auf diese Weise wird das Einlegen der Leiterenden in die Leiterfügeeinrichtung vereinfacht und verbessert.

Sehr vorteilhaft ist es, wenn die Leiterfügeeinrichtungen Teil eines elektrisch nichtleitenden Isolierkörpers des Verschaltrings sind. Auf diese Weise ist die Leiterfügeeinrichtung elektrisch nichtleitend ausgeführt und damit elektrisch isoliert gegenüber Leiterschienen, die in dem Verschaltring integriert sein können.

Nach einem vorteilhaften Ausführungsbeispiel ist vorgesehen, die steckbaren Leiterelemente der Steckwicklung über die Leiterfügeeinrichtungen der Verschaltringe zu Einzelzahnspulen zu verschalten, die sich jeweils mit mehreren Windungen um einen der Statorzähne erstrecken.

Auch vorteilhaft ist, wenn der Verschaltring an beiden Stirnseiten des Stators vorgesehen ist, wobei in dem Isolierkörper des einen Verschaltrings mehrere Stromschienen zur elektrischen Verschaltung der Leiterelemente angeordnet sind und wobei der Isolierkörper des anderen Verschaltrings stromschienenlos ausgebildet ist. Durch das Vorsehen des Verschaltrings an beiden Stirnseiten des Stators können die Leiterelemente an beiden Stirnseiten des Stators zu einer elektrischen Wicklung verschaltet werden.

Nach einem vorteilhaften Ausführungsbeispiel ist vorgesehen, die steckbaren Leiterelemente der Steckwicklung über die Leiterfügeeinrichtungen der Verschaltringe zu Einzelzahnspulen zu verschalten, die sich jeweils mit mehreren Windungen um einen der Statorzähne erstrecken, wobei die Einzelzahnspulen jeweils mit einem Spulenende an einer der Stromschienen des einen Verschaltrings und jeweils mit dem anderen Spulenende an einer anderen der Stromschienen desselben Verschaltrings angeschlossen sind.

Darüber hinaus vorteilhaft ist, wenn die Stromschienen des einen Verschaltrings jeweils elektrische Anschlüsse zum Anschließen der Leiterelemente aufweisen, wobei die elektrischen Anschlüsse jeweils eine Vertiefung aufweisen oder in einer Vertiefung des Isolierkörpers des Verschaltrings vorgesehen sind, wobei die Vertiefung zur Aufnahme eines elektrisch leitenden Fügemittels und zumindest eines Leiterendes eines der Leiterelemente ausgebildet ist. Auf diese Weise werden die Leiterelemente zuverlässig an einer der Schnittstellen des Stators elektrisch angeschlossen, und zwar in korrespondierender Weise zu der Fügeverbindung zwischen zwei Leiterelementen an der Leiterfügeeinrichtung.

Vorteilhaft ist, wenn eine oder mehrere der Stromschienen des einen Verschaltrings Kragabschnitte aufweisen, die jeweils in einen der Zahnabschnitte des Isolierkörpers des Verschaltrings hineinreichen. Auf diese Weise kann jeweils ein Spulenende eines der Einzelzahnspulen an dem jeweiligen Kragabschnitt einer der Stromschienen elektrisch angeschlossen werden, so dass eine einfache elektrische Verschaltung erreicht wird.

Außerdem vorteilhaft ist, dass die elektrischen Anschlüsse der Stromschienen über eine Öffnung im Isolierkörper des Verschaltrings zugänglich sind oder aus dem Isolierkörper herausragen. Auf diese Weise können die Leiterelemente an die Stromschienen des Verschaltrings angeschlossen werden.

Weiter vorteilhaft ist, dass das Fügemittel ein elektrisch leitender Kleber, ein Lötmittel oder ein Schweißzusatzwerkstoff ist.

### Zeichnung

Ein Ausführungsbeispiel der Erfindung ist in der Zeichnung vereinfacht dargestellt und in der nachfolgenden Beschreibung näher erläutert.
- Fig.1: zeigt eine dreidimensionale Ansicht auf eine erste Stirnseite eines erfindungsgemäßen Stators einer elektrischen Maschine mit CNT-Leiterelementen und mit einem erfindungsgemäßen ersten Verschaltring zur elektrischen Verschaltung der Leiterelemente,
- Fig.2: eine Teilansicht des Stators nach Fig.1,
- Fig.3: eine Teilansicht des erfindungsgemäßen Verschaltrings nach Fig.1 und Fig.2,
- Fig.4: ein Schaltschema für den erfindungsgemäßen Verschaltring nach Fig.1 bis Fig.3,
- Fig.5: eine dreidimensionale Ansicht auf eine zweite Stirnseite des erfindungsgemäßen Stators nach Fig.1 mit einem erfindungsgemäßen zweiten Verschaltring,
- Fig.6: eine Teilansicht auf die zweite Stirnseite des Stators nach Fig.5 und
- Fig.7: eine Teilansicht des zweiten Verschaltrings nach Fig.5 und Fig.6.

### Beschreibung des Ausführungsbeispiels

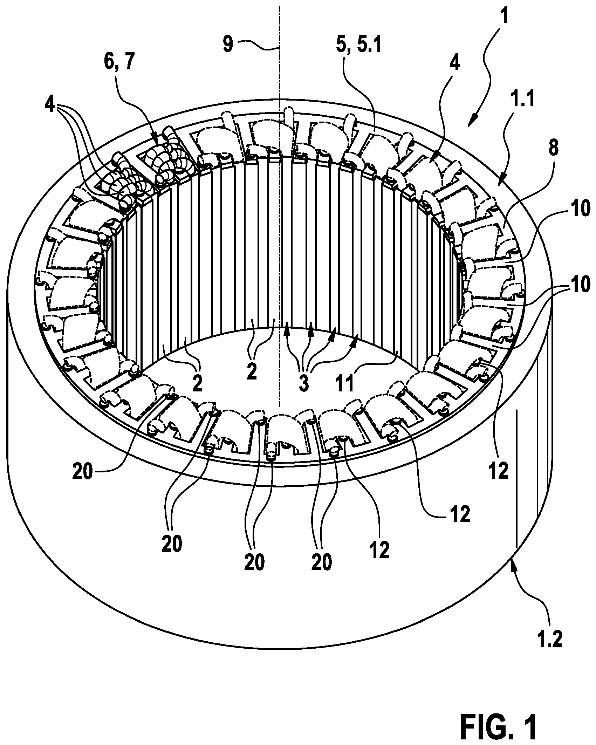

Fig.1 zeigt eine dreidimensionale Ansicht auf eine erste Stirnseite eines erfindungsgemäßen Stators einer elektrischen Maschine mit CNT-Leiterelementen und mit einem erfindungsgemäßen ersten Verschaltring zur elektrischen Verschaltung der Leiterelemente.

Der Stator 1 der elektrischen Maschine umfasst einen Statorkörper mit Statorzähnen 2 und mit zwischen den Statorzähnen 2 ausgebildeten Nuten 3, in denen jeweils elektrische Leiterelemente 4 zur Bildung einer elektrischen Wicklung 6 vorgesehen sind. Nach dem Ausführungsbeispiel sind in den Nuten 3 beispielsweise vier Leiterelemente 4 pro Nut 3 vorgesehen. Die Anzahl der Leiterelemente 4 pro Nut 3 ist aber ausdrücklich beliebig.

Der Statorkörper weist beispielsweise zumindet ein Statorblechpaket auf.

An beiden Stirnseiten 1.1,1.2 des Stators 1 ist jeweils ein Verschaltring 5 vorgesehen, der einen Ringabschnitt 8 und mehrere, von dem Ringabschnitt 8 in radialer Richtung bezüglich einer Statorachse 9 abstehende Zahnabschnitte 10 aufweist.

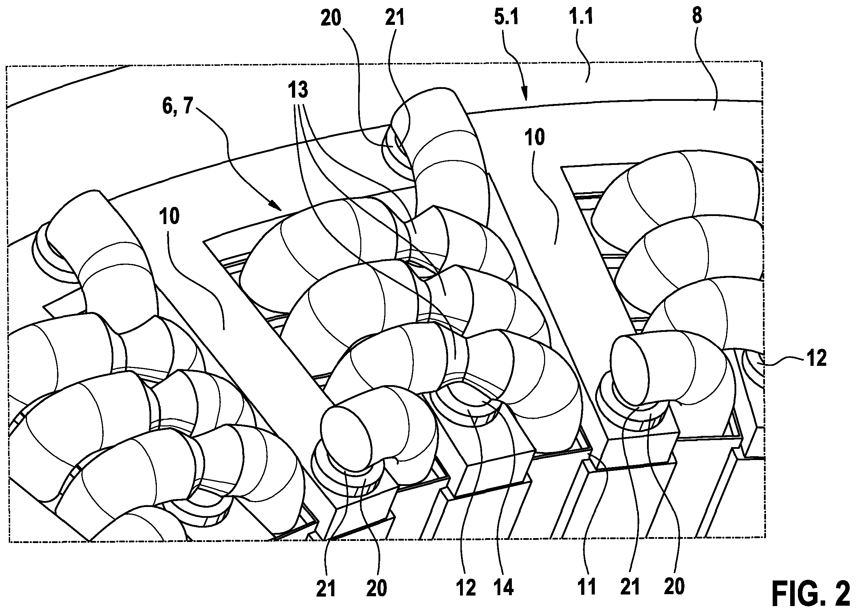

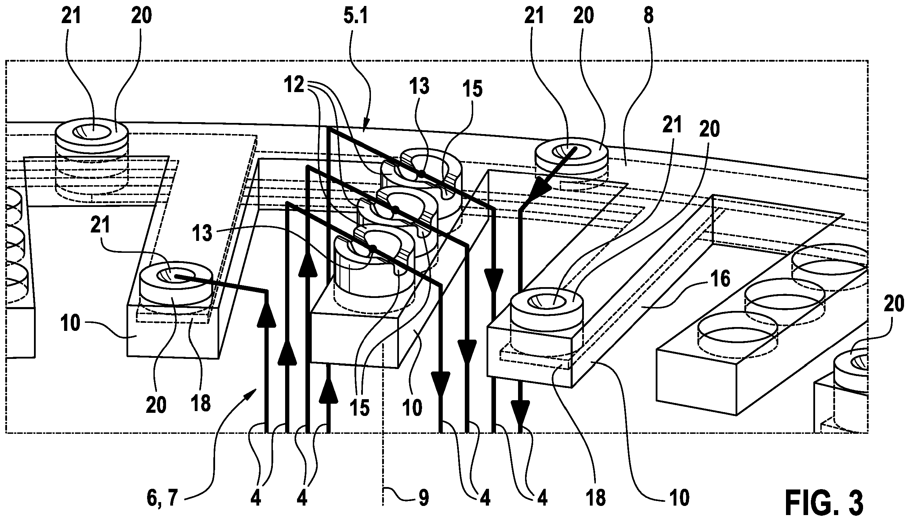

Erfindungsgemäß ist vorgesehen, dass die Leiterelemente 4 der elektrischen Wicklung als steckbare Leiterelemente einer als Steckwicklung ausgebildeten elektrischen Wicklung ausgeführt sind, dass die Leiterelemente 4 jeweils aus einem Verbund von Carbon-Nanotubes und/oder Graphenfasern gebildet sind und dass an zumindest einem der Zahnabschnitte 10 eines der Verschaltringe 5 zumindest eine elektrisch nichtleitende Leiterfügeeinrichtung 12 vorgesehen ist, an der jeweils zwei Leiterenden zweier unterschiedlicher Leiterelemente 4 mittels eines elektrisch leitenden Fügemittels elektrisch verbunden sind. Die dabei entstehende Fügeverbindung wird in Fig.2 und Fig.3 mit dem Bezugszeichen 13 gekennzeichnet.

Das Fügemittel kann beispielsweise ein elektrisch leitender Kleber, ein Lötmittel oder ein Schweißzusatzwerkstoff sein.

Die Leiterfügeeinrichtungen 12 des Verschaltrings 5 stellen jeweils eine Fügefläche zum Fügen der Leiterenden der betreffenden Leiterelemente 4 zur Verfügung, um auf diese Weise die Leiterelemente 4 zu einer funktionierenden elektrischen Wicklung zusammenzuschalten. Nach dem Ausführungsbeispiel werden die steckbaren Leiterelemente 4 der Steckwicklung an den Leiterfügeeinrichtungen 12 der Verschaltringe 5 zu Einzelzahnspulen 7 verbunden bzw. verschaltet. Die auf diese Weise gebildeten Einzelzahnspulen 7 erstrecken sich jeweils mit mehreren Windungen um einen der Statorzähne 2.

Fig.2 zeigt eine Teilansicht des Stators nach Fig.1.

Die steckbaren Leiterelemente 4 sind beispielsweise jeweils derart I-förmig oder stabförmig ausgebildet, dass sie jeweils einen einzigen, in einer der Nuten 3 liegenden Leiterschenkel aufweisen, der jeweils mit abgewinkelten, in unterschiedlichen Wickelköpfen liegenden Leiterenden aus der jeweiligen Nut 3 vorsteht. Die steckbaren Leiterelemente 4 können einen beliebigen, beispielsweise rechteckförmigen, trapezförmigen, kreisförmigen oder ovalen Querschnitt haben. Die einzelnen Carbon-Nanotubes und/oder Graphenfasern eines der Leiterelemente 4 können durch einen elektrisch isolierenden oder elektrisch leitenden Verbundstoff, insbesondere Harz oder Klebstoff, zu dem das entsprechende Leiterelement 4 bildenden Verbund verbunden sein. Die steckbaren Leiterelemente 4 können im Bereich der Nuten 3 jeweils von einer elektrischen Isolierung 11, beispielsweise einem sogenannten Nutisolationspapier, umschlossen sein.

Die Leiterfügeeinrichtung 12 an den Zahnabschnitten 10 eines der Verschaltringe 5 kann jeweils eine Vertiefung 14 umfassen, in die die Leiterenden zweier Leiterelemente 4 einlegbar sind, um diese mit dem elektrisch leitenden Fügemittel zusammenzufügen. Beispielsweise werden die Leiterenden zweier Leiterelemente 4 in eine der Vertiefungen 14 eingelegt, um anschließend das elektrisch leitende Fügemittel auf die beiden Leiterenden zu deren Verbindung aufzutragen.

Fig.3 zeigt eine Teilansicht des erfindungsgemäßen Verschaltrings nach Fig.1 und Fig.2. In Fig.3 sind die Leiterelemente 4 zur schematischen Darstellung lediglich als Strich dargestellt.

Nach dem Ausführungsbeispiel können an den vertieften Leiterfügeeinrichtungen 12 jeweils zwei Einführschlitze oder -öffnungen 15 vorgesehen sein, über die die Leiterenden der betreffenden Leiterelemente 4 in die Vertiefung 14 einlegbar sind.

Die Leiterfügeeinrichtungen 12 können Teil eines elektrisch nichtleitenden Isolierkörpers 16 des Verschaltrings 5 sein, mit anderen Worten ausgedrückt also einstückig an dem Isolierkörper 16 ausgebildet sein. Der Isolierkörper 16 des Verschaltrings 5 stellt den konturgebenden Basiskörper des Verschaltrings 5 dar und ist beispielsweise aus einem Kunststoff hergestellt.

Der Verschaltring 5 mit den erfindungsgemäßen Leiterfügeeinrichtungen 12 ist an beiden Stirnseiten 1.1,1.2 des Stators 1 vorgesehen. In dem Isolierkörper 16 des einen, also ersten Verschaltrings 5.1 sind zusätzlich mehrere Stromschienen 18 zur elektrischen Verschaltung der Leiterelemente 4 bzw. der Einzelzahnspulen 7 angeordnet. Die Stromschienen 18 sind einer elektrischen Phase oder einem elektrischen Sternpunkt zugeordnet. Die Leiterfügeeinrichtungen 12 sind durch das Material des Isolierkörpers 16 gegenüber den Stromschienen 18 elektrisch isoliert.

Der Isolierkörper 16 des anderen, also zweiten Verschaltrings 5.2 weist dagegen keine Stromschienen 18 auf und ist damit stromschienenlos ausgebildet.

Wie aus den Fig.2 und Fig.3 ersichtlich, sind die Einzelzahnspulen 7 jeweils mit einem Spulenende an einer der Stromschienen 18 des ersten Verschaltrings 5.1 und jeweils mit dem anderen Spulenende an einer anderen der Stromschienen 18 desselben Verschaltrings 5.1 angeschlossen.

Die Stromschienen 18 des ersten Verschaltrings 5 weisen zum Anschließen der Leiterelemente 4 bzw. der Einzelzahnspulen 7 jeweils elektrische Anschlüsse 20 auf. Die elektrischen Anschlüsse 20 des ersten Verschaltrings 5 können jeweils eine Vertiefung 21 umfassen oder in einer Vertiefung 21 des Isolierkörpers 16 des ersten Verschaltrings 5.1 ausgeführt sein. Die Vertiefung 21 der Anschlüsse 20 ist zur Aufnahme eines elektrisch leitenden Fügemittels und zumindest eines Leiterendes eines der Leiterelemente 4 ausgebildet. Die Vertiefung 21 kann zum leichteren Einlegen des jeweiligen Leiterendes äquivalent zu den Vertiefungen 14 einen Einführschlitz 15 oder eine Einführöffnung 15 aufweisen.

Die Anzahl der Zahnabschnitte 10 des ersten Verschaltrings 5.1 entspricht der Anzahl der Statorzähne 2 des Stators 1. Nach dem Ausführungsbeispiel sind an jedem zweiten Zahnabschnitt 10 des ersten Verschaltrings 5 mehrere Leiterfügeeinrichtungen 12 auf der dem Stator 1 abgewandten Stirnseite vorgesehen. Die Anzahl der Leiterfügeeinrichtungen 12 pro jedem zweiten Zahnabschnitt 10 entspricht beispielsweise der Anzahl der Leiterelemente 4 pro Nut 3 minus eins.

Eine oder mehrere der Stromschienen 18 des ersten Verschaltrings 5.1 können Kragabschnitte 22 haben, die jeweils in einen der Zahnabschnitte 10 des Verschaltrings 5.1 hineinreichen. Nach dem Ausführungsbeispiel weist nur eine der Stromschienen 18, die dem elektrischen Sternpunkt zugeordnet ist, die Kragabschnitte 22 auf. Eines der beiden Spulenenden jeder Einzelzahnspule 7 ist jeweils mit einem Anschluss 20 verbunden, der an einem der Zahnabschnitte 10 des ersten Verschaltrings 5.1 ausgeführt ist und einer dem elektrischen Sternpunkt bildenden Stromschiene 18 zugeordnet ist. Das andere der beiden Spulenenden derselben Einzelzahnspule 7 ist jeweils mit einem Anschluss 20 einer anderen Stromschiene 18 verbunden, der an dem Ringabschnitt 8 des ersten Verschaltrings 5.1 vorgesehen ist und einer der elektrischen Phasen zugeordnet ist. Die elektrischen Anschlüsse 20 der Stromschienen 18 sind jeweils über einen Durchbruch bzw. eine Öffnung im Isolierkörper 16 des ersten Verschaltrings 5.1 zum Anschließen der Leiterelemente 4 zugänglich oder die elektrischen Anschlüsse 20 stehen über den Durchbruch bzw. die Öffnung im Isolierkörper 16 aus dem Isolierkörper 16 vor bzw. ragen aus diesem heraus.

Nach dem Ausführungsbeispiel ist in jedem zweiten Zahnabschnitt 10 des ersten Verschaltrings 5.1 ein Kragabschnitt 22 der dem elektrischen Sternpunkt zugeordneten Stromschiene 18 vorgesehen, wobei die Zahnabschnitte 10 mit Leiterfügeeinrichtungen 12 und die Zahnabschnitte 10 mit Kragabschnitten 22 um einen Zahnabschnitt 10 zueinander versetzt sind. Es gibt also nach dem Ausführungsbeispiel keine Zahnabschnitte 10, die Leiterfügeeinrichtungen 12 und Kragabschnitte 22 umfassen.

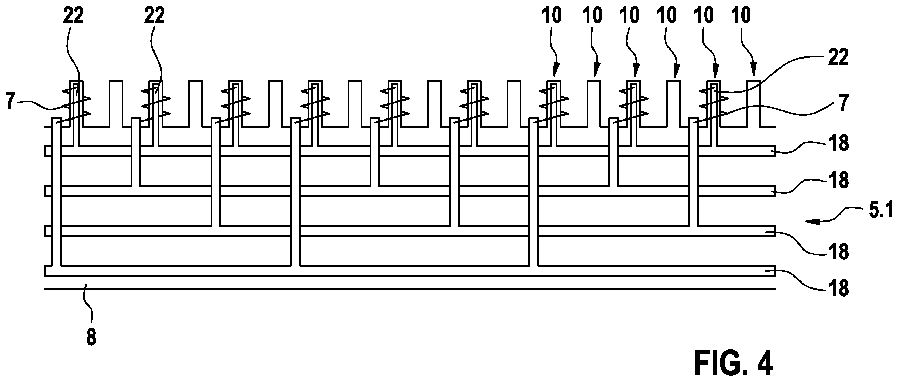

Fig.4 zeigt beispielhaft ein Schaltschema für den erfindungsgemäßen Verschaltring nach Fig.1 bis Fig.3 mit vier Stromschienen. Aus der Fig.4 ist beispielhaft ersichtlich, wie die Einzelzahnspulen 7 mit den Stromschienen 18 verbunden sein können.

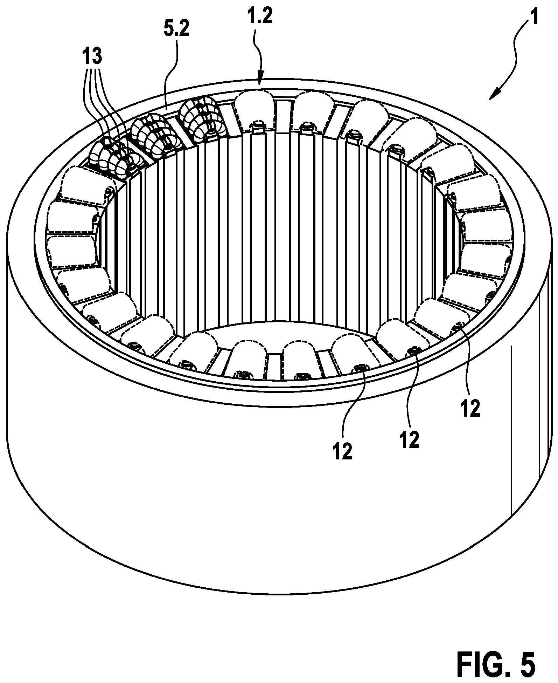

Fig.5 zeigt eine dreidimensionale Ansicht auf eine zweite Stirnseite des erfindungsgemäßen Stators nach Fig.1 mit einem erfindungsgemäßen zweiten Verschaltring.

Der zweite Verschaltring 5.2 nach Fig.2 unterscheidet sich gegenüber dem ersten Verschaltring 5 nach Fig.1 nur darin, dass er keine Stromschienen 18 und keine Anschlüsse 20 für die Stromschienen 18 aufweist. Darüber hinaus entfallen bei dem zweiten Verschaltring 5.2 die Zahnabschnitte 10, die im ersten Verschaltring 5.1 einen Kragabschnitt 22 einer Stromschiene 18 umfassen. Dadurch ergibt sich für den zweiten Verschaltring 5.2 eine Anzahl von Zahnabschnitten 10, die der halben Anzahl an Statorzähnen 2 des Stators 1 entspricht. Mit anderen Worten ausgedrückt weist der zweite Verschaltring 5.2 nur an jedem zweiten Statorzahn 2 einen Zahnabschnitt 10 auf. Ansonsten ist der zweite Verschaltring 5.2 wie der erste Verschaltring 5.1 ausgeführt, umfasst also auch den Isolierkörper 16 mit den erfindungsgemäßen Leiterfügeeinrichtungen 12 an den Zahnabschnitten 10. Im Unterschied zu dem ersten Verschaltring 5.1 hat der zweite Verschaltring 5.2 an jedem Zahnabschnitt 10 Leiterfügeeinrichtungen 12, wobei die Anzahl der Leiterfügeeinrichtungen 12 pro Zahnabschnitt 10 entsprechend dem ersten Verschaltring 5.1 ausgeführt ist.

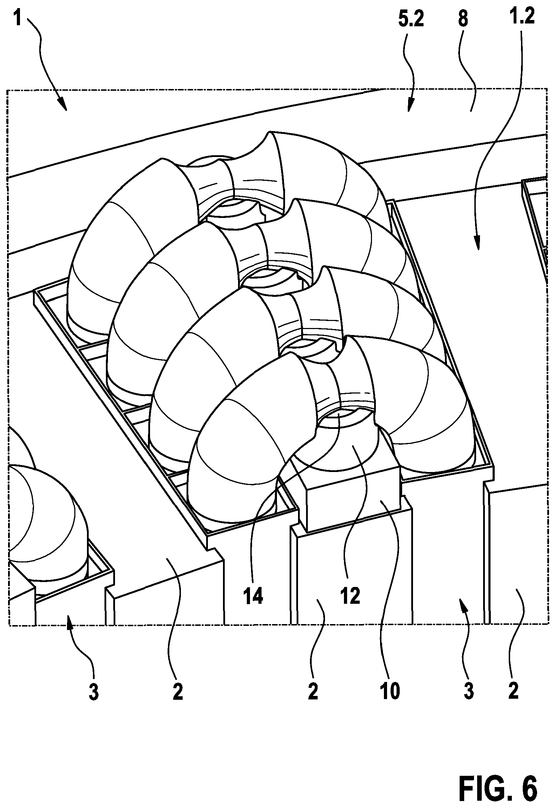

Fig.6 zeigt eine Teilansicht auf die zweite Stirnseite 1.2 des Stators 1 nach Fig.5.

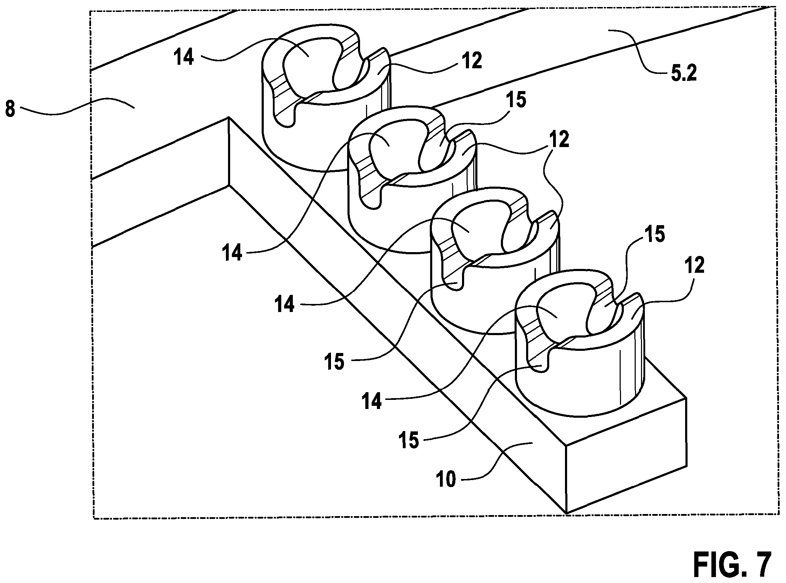

Fig.7 zeigt eine Teilansicht des zweiten Verschaltrings nach Fig.5 und Fig.6. In der Fig.7 sind die Leiterelemente 4 nicht dargestellt, so dass die Vertiefungen 14 der Leiterfügeeinrichtungen 12 gut erkennbar sind.

## Patentansprüche

1. Stator einer elektrischen Maschine, der Statorzähne (2) und zwischen den Statorzähnen (2) ausgebildete Nuten (3) aufweist, in denen jeweils elektrische Leiterelemente (4) einer elektrischen Wicklung vorgesehen sind, wobei an zumindest einer Stirnseite (1.1, 1.2) des Stators (1) ein Verschaltring (5, 5.1,5.2) vorgesehen ist, der einen Ringabschnitt (8) und mehrere von dem Ringabschnitt (8) in radialer Richtung bezüglich einer Statorachse (9) abstehende Zahnabschnitte (10) aufweist,
**dadurch gekennzeichnet, dass**
- die Leiterelemente (4) der elektrischen Wicklung als steckbare Leiterelemente (4) der als Steckwicklung ausgebildeten elektrischen Wicklung ausgeführt sind, dass
- die Leiterelemente (4) jeweils aus einem Verbund von Carbon-Nanotubes und/oder Graphenfasern gebildet sind, dass
- an zumindest einem der Zahnabschnitte (10) des Verschaltrings (5) zumindest eine elektrisch nichtleitende Leiterfügeeinrichtung (12) vorgesehen ist, an der jeweils zwei Leiterenden zweier unterschiedlicher Leiterelemente (4) mittels eines elektrisch leitenden Fügemittels elektrisch verbunden sind.

2. Stator nach Anspruch 1, **dadurch gekennzeichnet, dass** die Leiterfügeeinrichtung (12) jeweils eine Vertiefung (14) umfasst, wobei insbesondere an den Leiterfügeeinrichtungen(12) jeweils zwei Einführschlitze (15) vorgesehen sind, über die die Leiterenden in die Vertiefung (14) einlegbar sind.

3. Stator nach einem der vorhergehenden Ansprüche, **dadurch gekennzeichnet, dass** die Leiterfügeeinrichtungen (12) Teil eines elektrisch nichtleitenden Isolierkörpers (16) des Verschaltrings (5) sind.

4. Stator nach einem der vorhergehenden Ansprüche, **dadurch gekennzeichnet, dass** die steckbaren Leiterelemente (4) der Steckwicklung über die Leiterfügeeinrichtungen (12) der Verschaltringe (5) zu Einzelzahnspulen (7) verschaltet sind, die sich jeweils mit mehreren Windungen um einen der Statorzähne (2) erstrecken.

5. Stator nach einem der vorhergehenden Ansprüche, **dadurch gekennzeichnet, dass** der Verschaltring (5) an beiden Stirnseiten (1.1,1.2) des Stators (1) vorgesehen ist, wobei in dem Isolierkörper (16) des einen Verschaltrings (5.1) mehrere Stromschienen (18) zur elektrischen Verschaltung der Leiterelemente (4) angeordnet sind und wobei der Isolierkörper (16) des anderen Verschaltrings (5.2) stromschienenlos ausgebildet ist.

6. Stator nach Anspruch 5, **dadurch gekennzeichnet, dass** die Einzelzahnspulen (7) jeweils mit einem Spulenende an einer der Stromschienen (18) des einen Verschaltrings (5.1) und jeweils mit dem anderen Spulenende an einer anderen der Stromschienen (18) desselben Verschaltrings (5.1) angeschlossen sind.

7. Stator nach einem der Ansprüche 5 oder 6, **dadurch gekennzeichnet, dass** die Stromschienen (18) des einen Verschaltrings (5.1) jeweils elektrische Anschlüsse (20) zum Anschließen der Leiterelemente (4) aufweisen, wobei die elektrischen Anschlüsse (20) jeweils eine Vertiefung (21) aufweisen oder in einer Vertiefung (21) des Isolierkörpers (16) des Verschaltrings (5.1) vorgesehen sind, wobei die Vertiefung (21) zur Aufnahme eines elektrisch leitenden Fügemittels und zumindest eines Leiterendes eines der Leiterelemente (4) ausgebildet ist.

8. Stator nach einem der Ansprüche 5 bis 7, **dadurch gekennzeichnet, dass** eine oder mehrere der Stromschienen (18) des einen Verschaltrings (5.1) Kragabschnitte (22) aufweist, die jeweils in einen der Zahnabschnitte (10) des Isolierkörpers (16) des Verschaltrings (5.1) hineinreichen.

9. Stator nach Anspruch 7, **dadurch gekennzeichnet, dass** die elektrischen Anschlüsse (20) der Stromschienen (18) über eine Öffnung im Isolierkörper (16) des Verschaltrings (5.1) zugänglich sind oder aus dem Isolierkörper (16) herausragen.

10. Stator nach einem der vorhergehenden Ansprüche, **dadurch gekennzeichnet, dass** das Fügemittel ein elektrisch leitender Kleber, ein Lötmittel oder ein Schweißzusatzwerkstoff ist.

## Claims

1. Stator of an electric machine that has stator teeth (2) and embodied between the stator teeth (2) are grooves (3) in which are provided in each case electrical conductor elements (4) of an electrical winding, wherein an interconnecting ring (5, 5.1, 5.2) is provided on at least one end face (1.1, 1.2) of the stator (1), said interconnecting ring comprising an annular section (8) and multiple toothed sections (10) that protrude from the annular section (8) in the radial direction with respect to a stator axis (9),
**characterized in that**
- the conductor elements (4) of the electrical winding are embodied as pluggable conductor elements (4) of the electrical winding that is embodied as a plug-in winding,
- the conductor elements (4) are formed in each case from a composite of carbon nanotubes and/or graphene fibres,
- at least one electrically non-conductive conductor joining device (12) is provided on at least one of the toothed sections (10) of the interconnecting ring (5) and in each case two conductor ends of two different conductor elements (4) are electrically connected to said conductor joining device by means of an electrically conductive joining agent.

2. Stator according to Claim 1, **characterized in that** the conductor joining device (12) comprises in each case a depression (14), wherein in particular the conductor joining devices (12) are provided in each case with two insertion slits (15) by way of which the conductor ends can be placed in the depression (14).

3. Stator according to either one of the preceding claims, **characterized in that** the conductor joining devices (12) are part of an electrically non-conductive insulating body (16) of the interconnecting ring (5).

4. Stator according to any one of the preceding claims, **characterized in that** the pluggable conductor elements (4) of the plug-in winding are connected by way of the conductor joining devices (12) of the interconnecting rings (5) to individual toothed coils (7) that in each case extend with multiple windings about one of the stator teeth (2).

5. Stator according to any one of the preceding claims, **characterized in that** the interconnecting ring (5) is provided at both end faces (1.1,1.2) of the stator (1), wherein multiple current rails (18) are arranged in the insulating body (16) of the one interconnecting ring (5.1) so as to electrically interconnect the conductor elements (4) and wherein the insulating body (16) of the other interconnecting ring (5.2) is embodied in a current rail-free manner.

6. Stator according to Claim 5, **characterized in that** the individual toothed coils (7) are connected in each case by a coil end to one of the current rails (18) of the one interconnecting ring (5.1) and in each case by the other coil end to another of the current rails (18) of the same interconnecting ring (5.1).

7. Stator according to either one of Claims 5 and 6, **characterized in that** the current rails (18) of the one interconnecting ring (5.1) have in each case electrical connectors (20) so as to connect the conductor elements (4), wherein the electrical connectors (20) each have a depression (21) or are provided in a depression (21) of the insulating body (16) of the interconnecting ring (5.1), wherein the depression (21) is embodied so as to receive an electrically conductive joining agent and at least one conductor end of one of the conductor elements (4).

8. Stator according to any one of Claims 5 to 7, **characterized in that** one or more of the current rails (18) of the one interconnecting ring (5.1) has/have cantilever sections (22) that each reach into one of the toothed sections (10) of the insulating body (16) of the interconnecting ring (5.1).

9. Stator according to Claim 7, **characterized in that** the electrical connectors (20) of the current rails (18) are accessible by way of an opening in the insulating body (16) of the interconnecting ring (5.1) or protrude out of the insulating body (16).

10. Stator according to any one of the preceding claims, **characterized in that** the joining agent is an electrically conductive adhesive, a soldering agent or a welding filler material.

## Revendications

1. Stator d'une machine électrique, qui possède des dents (2) de stator et des rainures (3) formées entre les dents (2) de stator, dans lesquelles sont respectivement prévus des éléments conducteurs (4) électriques d'un enroulement électrique, un anneau d'interconnexion (5, 5.1, 5.2), qui possède une portion annulaire (8) et plusieurs portions dentées (10) faisant saillie de la portion annulaire (8) dans la direction radiale par rapport à un axe (9) du stator, étant présent à au moins un côté frontal (1.1, 1.2) du stator (1),
**caractérisé en ce que**
- les éléments conducteurs (4) de l'enroulement électrique sont réalisés sous la forme d'éléments conducteurs (4) enfichables de l'enroulement électrique réalisé sous la forme d'enroulement enfichable, **en ce que**
- les éléments conducteurs (4) sont respectivement formés à partir d'un composite de nanotubes de carbone et/ou de fibres de graphène, **en ce que**
- au moins un dispositif d'assemblage (12) de conducteurs électriquement non conducteur est prévu au niveau d'au moins l'une des portions dentées (10) de l'anneau d'interconnexion (5), sur lequel deux extrémités de conducteur de deux éléments conducteurs (4) différents sont à chaque fois reliées électriquement au moyen d'un moyen d'assemblage électriquement conducteur.

2. Stator selon la revendication 1, **caractérisé en ce que** le dispositif d'assemblage (12) de conducteurs (comprend respectivement un renfoncement (14), deux fentes d'introduction (15) étant notamment prévues au niveau des dispositifs d'assemblage (12) de conducteurs, par lesquelles les extrémités de conducteur peuvent être insérées dans le renfoncement (14).

3. Stator selon l'une des revendications précédentes, **caractérisé en ce que** les dispositifs d'assemblage (12) de conducteurs font partie d'un corps isolant (16) électriquement non conducteur de l'anneau d'interconnexion (5).

4. Stator selon l'une des revendications précédentes, **caractérisé en ce que** les éléments conducteurs (4) enfichables de l'enroulement enfichable sont inter-connectés par l'intermédiaire des dispositifs d'assemblage (12) de conducteurs des anneaux d'interconnexion (5) pour former des bobines à dent unique (7), qui s'étendent respectivement avec plusieurs spires autour de l'une des dents (2) de stator.

5. Stator selon l'une des revendications précédentes, **caractérisé en ce que** l'anneau d'interconnexion (5) est prévu au niveau des deux côtés frontaux (1.1, 1.2) du stator (1), plusieurs barres conductrices (18) destinées à l'interconnexion électrique des éléments conducteurs (4) étant disposées dans le corps isolant (16) de l'un des anneaux d'interconnexion (5.1) et le corps isolant (16) de l'autre anneau d'interconnexion (5.2) étant réalisé sans barres conductrices.

6. Stator selon la revendication 5, **caractérisé en ce que** les bobines à dent unique (7) sont raccordées respectivement par une extrémité de bobine à l'une des barres conductrices (18) dudit un anneau d'interconnexion (5.1) et par l'autre extrémité de bobine à une autre des barres conductrices (18) du même anneau d'interconnexion (5.1).

7. Stator selon l'une des revendications 5 et 6, **caractérisé en ce que** les barres conductrices (18) dudit un anneau d'interconnexion (5.1) possèdent respectivement des bornes électriques (20) destinées au raccordement des éléments conducteurs (4), les bornes électriques (20) possédant respectivement un renfoncement (21) ou étant prévues dans un renfoncement (21) du corps isolant (16) de l'anneau d'interconnexion (5.1), le renfoncement (21) étant configuré pour recevoir un moyen d'assemblage électriquement conducteur et au moins une extrémité de conducteur de l'un des éléments conducteurs (4).

8. Stator selon l'une des revendications 5 à 7, **caractérisé en ce qu'**une ou plusieurs des barres conductrices (18) dudit un anneau d'interconnexion (5.1) possèdent des portions en porte-à-faux (22), qui pénètrent respectivement dans l'une des portions dentées (10) du corps isolant (16) de l'anneau d'interconnexion (5.1).

9. Stator selon la revendication 7, **caractérisé en ce que** les bornes électriques (20) des barres conductrices (18) sont accessibles par le biais d'une ouverture dans le corps isolant (16) de l'anneau d'interconnexion (5.1) ou font saillie hors du corps isolant (16).

10. Stator selon l'une des revendications précédentes, **caractérisé en ce que** le moyen d'assemblage est une colle électriquement conductrice, un agent de brasage ou un matériau d'apport de soudure.
